# EUROPEAN PATENT APPLICATION

(11) **EP 2 048 831 A1**
(43) Date of publication of application: **15.04.2009**
(21) Application number: 07425640.5
(22) Date of filing: 12.10.2007
(51) Int. Cl.: H04L 12/56

(54) **Method and systems for QoS-aware flow control in communication networks, corresponding network and computer program product**

(71) Applicant: Nokia Siemens Networks S.p.A., 20126 Milano (IT)
(72) Inventor: Aliotta, Mario, 20040 Roncello (IT); Santacesaria, Claudio, 20139 Milano (IT)
(74) Representative: Fischer, Michael

(57) **Abstract**

Transmitting data in an Ethernet network including nodes that support differentiated queues for different Classes of Service and queue congestion handling, involves the steps of recognizing at one node in the network that a given queue for a given Class of Service is congested, and causing the node to send to another node in the network pause frames that explicitly identify that queue for a given Class of Service as congested.
The node receiving the pause frames may then control the transmission rates for different outbound queues towards the first node according to the congestion information carried by the pause frames.

## Description

### Field of the invention

The invention relates to techniques for flow control in communication networks.

### Description of the related art

The Ethernet protocol has been successful in Local Area Network (LANs) applications thanks to its inherent simplicity. Industry is now exploring the possibility of adopting Ethernet, and possible evolutions thereof, as a transport technology for carrier networks.

In this new prospected area of use various issues arise related e.g. to the appropriate handling of Quality of Service (QoS). This is one of the key aspects that an Ethernet protocol has to deal with in order to be able to adequately cover these new applications.

In fact, in an Ethernet environment, nodes are not conceived to exchange detailed congestion status information. The Ethernet environment currently provides a QoS paradigm based on differentiated queuing by class of traffic (class of traffic is identified by CoS - i.e. Class of Service - priority bits in the Virtual LAN or VLAN header according to the IEEE 802.1p standard) and on discarding packets in case of queue overflow. This mechanism is effective and simple but leads to packets being discarded and requires substantial storing capability at each node.

A different mechanism is also available that allows a node to communicate an existing congestion situation to a previous node (i.e. a node located upstream) in the communication path. This mechanism is implemented through a flow control protocol which relies on so-called "pause" frames. When a pause frame is issued from one node to the node preceding it, the preceding node reduces or stops its transmission rate. This approach may minimize the storage capability required at certain simple nodes and, if implemented end-to-end, can backpressure a congestion situation to the one node (i.e. the source of the traffic) that can actually take action to deal with the congestion situation.

This approach may not be satisfactory because it is not aware of QoS differentiations: if two different traffic flows are present with different queues and one of the queues is (almost) filled, the node can either send a pause frame and stop the traffic for both queues or merely accept the loss of frames without sending any pause frame. So far this situation has resulted in flow control being practically abandoned in QoS enabled Ethernet arrangements.

Document WO 02/091672 discloses an arrangement wherein, in flow control, such as in Ethernet communication, the data is divided into queues of different priorities so that, when transmission is enabled, QoS may be provided by first transmitting data of high priority. A networking element, such as a switch, a router, a bridge or a MAC (Medium Access Control) element, is adapted to transfer flow control information without awaiting its own buffer to fill. Reportedly, this reduced latency and facilitates the provision of networking elements without buffers. Specifically, in the arrangement of WO 02/091672, transferring means are provided adapted to receive stopping information and, upon receipt thereof, stop transfer of data packets or frames from at least one of the queues to at least one output.

The inventors have observed that, while identified in its general terms of operation, this arrangement is not defined in terms that enable proper implementation thereof in an Ethernet environment.

### Object and summary of the invention

The object of the invention is thus to provide a fully satisfactory response to the needs outlined in the foregoing.

According to the present invention, that object is achieved by means of a method having the features set forth in the claims that follow. The invention also relates to a corresponding system (i.e. one or more nodes as complementary elements in a network such as an Ethernet) as well as a corresponding network and a computer program product, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/ modular fashion.

The claims are an integral part of the disclosure of the invention provided herein.

An embodiment of the arrangement described herein is thus based on the concept of defining "pause frames" which are QoS aware; in this way a node can request to a previous node to reduce its transmit rate only for the congested queue(s): this allows nodes with low storage capability to handle properly QoS without excessive discarding of packets and at the same time allows complete QoS handling preserving strict priority, Weighted Fair Queuing and CIR/EIR (Committed Information Rate/Extended Information Rate) Quality of Service guarantees on differentiated queues in the nodes.

In an embodiment, a communication node with Ethernet interface supporting differentiated queues for different Classes of Service and supporting queue congestion handling is configured to recognize that a specific queue is full or above a certain threshold; the node thus identifies such queue or queues as congested and sends pause frames making explicit reference to congested queues.

In an embodiment, a communication node with Ethernet interface supporting differentiated queues for different Classes of Service and supporting transmission rate control based on remote node signaling is configured to receive a pause frame and reduce or stop transmission as a consequence of such pause frame reception; the node has the capability of selectively stopping or reduce the transmission rate for different outbound queues according to explicit information about each queue remote node congestion.

In an embodiment, a pause frame is used which embeds information about what queues are congested among the supported number of queues. In an embodiment, a pause frame message is used with an 8 bit queue mask, wherein each bit represents the status of a queue where bit equal to 1 means that the queue is congested and bit equal to 0 means the queue is not congested. In an embodiment, a different pause frame message is sent for each queue which is congested. In an embodiment, the pause frame is an Ethernet pause frame with added a 802.1p information in a VLAN header.

In certain embodiments, QoS aware pause frames are sent having an 8 bit bit-mask that bring information on the congestion per each of the 8 Ethernet priorities. Certain embodiments can be based on 802.1p tag added to pause frames to associate a pause frame to a Class of service.

The former approach results in a longer message but a single message can bring information on all Classes of Service. The latter approach results in a shorter message but plural (e.g. 8) messages are necessary when stopping all queues. In an embodiment adopting the latter approach, the pause frame can be limited to a specific VLAN (if VLAN ID is given a specific value) but it is also possible to keep the pause frame associated to VLAN priority only by using the native VLAN (VLAN ID=0).

Certain embodiments may adopt the approach of embedding a e.g. 3 bit queue/Class of Service ID into the pause frame message, which yields similar results to the latter approach considered in the foregoing.

In most embodiments, former pause frames can be considered as equivalent to "stop all queues" thus keeping backward compatibility.

### Brief description of the annexed views

The invention will now be described, by way of example only, with reference to the enclosed figures of drawing, wherein:
- Figure 1 is representative of a pause frame format as currently provided in a Ethernet environment;
- Figure 2 is representative of a first embodiment of a QoS-aware pause frame format with a mask;
- Figure 3 is representative of a second embodiment of a QoS-aware pause frame format with a VLAN tag; and
- Figure 4 is representative of a third embodiment of a QoS-aware pause frame format with a queue identifier.

### Detailed description of preferred embodiments

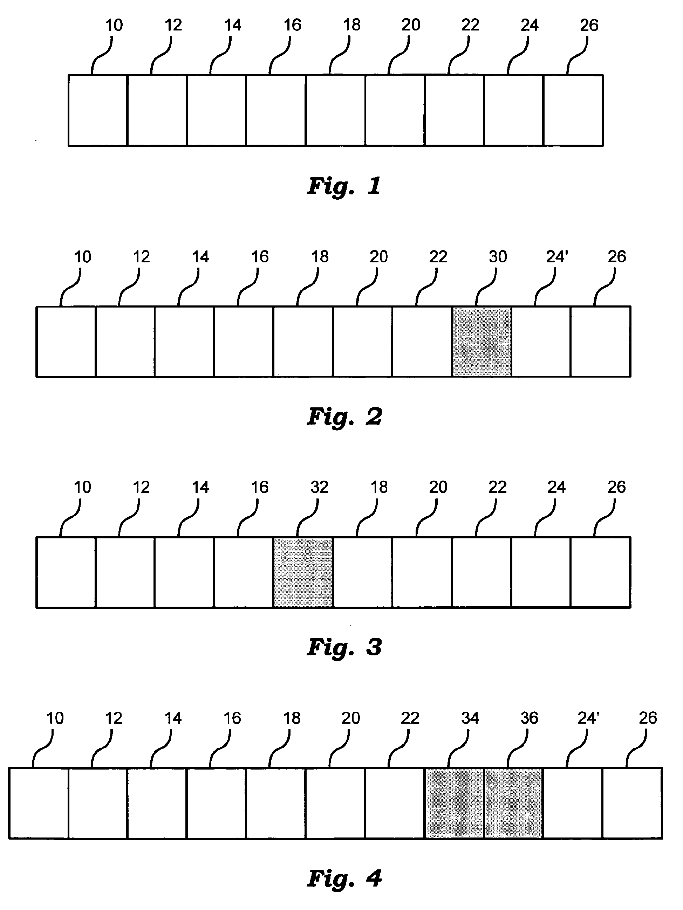

As indicated, Figure 1 is representative of a pause frame format as currently provided in a Ethernet environment. This essentially provides a QoS paradigm based on differentiated queuing by class of traffic (class of traffic is identified by CoS - i.e. Class of Service - priority bits in the Virtual LAN or VLAN header according to the IEEE 802.1p standard).

Specifically, the following definitions apply to the fields numbered 10 to 26 as shown in figure 1 (and, insofar as applicable, figures 2 to 4):
- 10: Preamble (7-bytes)
- 12: Start Frame Delimiter (1-byte)
- 14: Dest.MAC Address(6-bytes)
   =(01-80-C2-00-00-01)or unique DA
- 16: Source MAC Address (6-bytes)
- 18: Length/Type (2-bytes)
   = 802.3 MAC Control (88-08)
- 20: MAC Control Opcode (2-bytes)
   = PAUSE (00-01)
- 22: MAC Control Parameters (2-bytes)
   =(00-00 to FF-FF)
- 24: Reserved (42-bytes)= all zeros
- 26: Frame Check Sequence (4-bytes)

The QoS-aware pause frame format of figure 2 further includes a mask 30 comprised of e.g. 1 byte (8 bits), typically derived from the reserved bytes, whose number is thus reduced (e.g. to 41 in the field marked 24').

The mask 30 carries information about what queues are congested among the supported number of queues. Specifically, in each bit in the mask represents the status of a queue where bit equal to e.g. 1 may mean that the queue is congested and bit equal to e.g. 0 may correspondingly mean that the queue is not congested. A different pause frame message may thus be sent for each queue which is congested.

In the embodiment shown in figure 3, the pause frame can be limited to a specific VLAN ID (or tag 32 including e.g. 4 bytes) which is given a specific value. It may also be possible to keep the pause frame associated to VLAN priority only by using the native VLAN (VLAN ID=0) or another reserved value for VLAN ID (e.g. VLAN ID=all binary 1's).

In either case the reserved bytes in field 24 are left unaffected.

Figure 4 shows a QoS-aware pause frame format with a queue/Class of Service identifier (ID) 34 including e.g. 3 bits. This arrangement provides similar results to the approach of figure 3.

In the arrangement of Figure 4, the bits of the queue/Class of Service ID 34 are again typically derived from one of the reserved bytes, whose number is thus reduced (e.g. to 41 in the field marked 24'), while the remaining unused bits (to the number of 5 in the exemplary case considered) are grouped in a field 36 of reserved bits.

Consequently, without prejudice to the underlying principles of the invention, the details and the embodiments may vary, even appreciably, with reference to what has been described by way of example only, without departing from the scope of the invention as defined by the annexed claims.

## Claims

1. A method of transmitting data in a packet network including nodes that support differentiated queues for different Classes of Service and queue congestion handling, the method including the steps of:
- recognizing at one of said nodes that a given queue for a given Class of Service is congested,
- causing said node to send to at least one other node in the network at least one pause frame that identifies said given queue for a given Class of Service as congested.

2. The method of claim 1, further comprising the steps of:
- receiving said at least one pause frame at said at least one other node in the network,
- controlling transmission from said at least one other node in the network towards said one of said nodes as a consequence of such pause frame reception by selectively controlling the transmission rates for different queues outbound from said at least one other node in the network according to the congestion information carried by said at least one pause frame.

3. The method of either of claims 1 or 2, wherein said step of recognizing that a given queue for a given Class of Service is congested includes recognizing one of:
- said given queue for a given Class of Service being full, and
- said queue for a given Class of Service being filled above a certain filling threshold.

4. The method of any of the previous claims, wherein said at least one pause frame has embedded therein information (30, 32, 34) identifying what queues are congested among the queues supported by said one of said nodes.

5. The method of claim 4, wherein said at least one pause frame includes a multi-bit mask (30, 32, 34) wherein each bit in the mask is representative of the status of a queue.

6. The method of any of the previous claims, including the step of said one of said nodes sending a different pause frame message for each given queue for a given Class of Service which is recognized as congested

7. The method of any of the previous claims, wherein said at least one pause frame is an Ethernet pause frame with added a 802.1p information in a VLAN header (32).

8. The method of any of the previous claims 1 to 6, wherein said at least one pause frame includes a multi-bit queue/Class of Service identifier (34).

9. A node in a communication network with a network interface that supports differentiated queues for different Classes of Service and queue congestion handling, the node configured for:
- recognizing that a given queue for a given Class of Service supported is congested,
- sending at least one pause frame that identifies said given queue for a given Class of Service as congested.

10. A node in a communication network with a network interface that supports differentiated queues for different Classes of Service and queue congestion handling, the node configured for:
- receiving from at least one other node in the network at least one pause frame indicative of a given queue for a given Class of Service supported by said at least one other node in the network being congested,
- controlling transmission towards said at least one other node in the network as a consequence of such pause frame reception, by selectively controlling the transmission rates for different outbound queues according to the congestion information carried by said at least one pause frame.

11. A communication network including nodes that support differentiated queues for different Classes of Service and queue congestion handling, wherein the network includes nodes according to either of claims 9 or 10.

12. The network of claim 11, in the form of an Ethernet.

13. A computer program product, loadable in the memory of at least one computer and including software code portions for performing the steps of the method of any of claims 1 to 8.
